# EUROPEAN PATENT SPECIFICATION

(11) **EP 0 766 654 B1**
(45) Date of publication and mention of the grant of the patent: **13.01.1999**
(21) Application number: 95923200.0
(22) Date of filing: 23.06.1995
(51) Int. Cl.: C03C 13/06, C03C 3/087, A01G 31/02

(54) **THERMOSTABLE AND BIOLOGICALLY SOLUBLE FIBRE COMPOSITIONS**
THERMOSTABILE UND BIOLÖSLICHE FASERZUSAMMENSETZUNGEN
COMPOSITIONS DE FIBRES THERMOSTABLES ET BIOLOGIQUEMENT SOLUBLES

(30) Priority: 23.06.1994 DK 75194
(43) Date of publication of application: 09.04.1997
(73) Proprietor: Rockwool International A/S, 2640 Hedehusene (DK)
(72) Inventor: S RENSEN, Lone, M ller, DK-3460 Birker d (DK); JENSEN, S ren, Lund, DK-1055 Copenhagen K (DK); CHRISTENSEN, Vermund, Rust, DK-4000 Roskilde (DK); GULDBERG, Marianne, DK-2860 S borg (DK)
(74) Representative: Kyed, Iver
(86) International application number: DK9500262
(87) International publication number: WO9600196

(56) References cited:
- EP-A- 0 201 426
- EP-A- 0 459 897
- WO-A-93/22251

## Description

The present invention relates to thermostable man-made vitreous fibres (MMV fibres) and more specifically to thermostable MMV fibres which are soluble in biological fluids. The present invention also relates to products, such as insulation products and plant growth media made from such fibres as well as to fibres useful for reinforcement or as fillers.

MMV fibre insulation products are widely used and have been commercial products for a long period of time. The insulation products are made from raw materials which are melted and spun into fibres. Such products also comprise a binder, which holds the fibres together. The binder is usually a phenol-formaldehyde resin or a urea-modified phenol-formaldehyde resin.

It is well known that rock and slag based fibre insulation products present the advantage compared to glass fibre insulation products that they exhibit a higher fire resistance, i.e. an improved thermostability. Typically, glass wool withstands temperatures up to around 650°C whereas stone wool is capable of withstanding temperatures up to about 1000°C. It is highly desirable to maintain this excellent property in any modification of the hitherto known rock or slag based fibre products.

Recently, more attention has been put to health issues associated with various fibrous materials, including MMV fibres. It is well known that inhalation of certain types of fibres such as asbestos fibres may lead to respiratory diseases, including lung cancer. It is believed that an important factor is the tendency of the asbestos fibres to remain in the lung for extended periods of time. Although there has not yet been provided any evidence of MMV fibres being the cause of respiratory or other diseases in man, it is desirable to provide MMV fibres with an increased dissolution rate in biological fluids in order to reduce their half-time in the lungs upon inhalation.

The concern for possible health effects of MMV fibres has been the reason for a number of investigations in the recent years. It is believed that apart from the fibre dimensions, also the time of residence in the lung may be an important parameter for causing disease. The residence time is influenced by the physical clearance of the fibres from the lung and by the rate of dissolution of the fibres.

The rate of dissolution of fibres may be assessed in different ways. In in vitro measurements the fibres are subjected to the influence of artificial, physiological solutions (Gamble's solution, modified according to the disclosure in Scholze, H. Conradt.: An in vitro study of the chemical durability of siliceous fibres. Ann. Occ. Hyg. 31, p. 683-692, (1987)), believed to resemble the conditions in the lung fluids. The liquids used are all characterised in that they have a pH of 7.4-7.8. However, it is known from Carr, Ian: The Macrophage - A Review of Ultrastructure and Function. Academic Press, (1973), that the pH in the macrophages is lower, i.e. more acidic, than that of the lung fluid, resembled by the normally used liquids.

Recent published measurements of fibre durability, including in vivo measurements of the fibre dissolution in rat lungs indicate that this difference in pH may account for different rates of dissolution, and it has been found that the fibres, when sufficiently short, may be engulfed by the macrophages. This might explain the lower rate of dissolution observed for shorter glass wool fibres.

WO 89/12032 discloses inorganic fibre compositions among which some have passed the ASTM E-119 two hour fire test as well as exhibit low durabilities in physiological saline solutions, i.e. have high dissolution rates therein. The components of the prior art compositions may vary considerably. However, all the disclosed compositions are made from pure metal oxides or from less pure raw materials with addition of pure oxides which make the disclosed compositions very costly.

International patent application No. PCT/DK93/00435 describes a fiberisable composition which is thermostable and has a high dissolution rate in biological fluids and which consists essentially of

| | |
|---|---|
| SiO₂ | 53.5 - 64 w/w% |
| Al₂O₃ | ≤ 4 w/w% |
| CaO | 10 - 20 w/w% |
| MgO | 10 - 20 w/w% |
| FeO | 6.5 - 8 w/w%, |

the total amount of FeO and Fe₂O₃ being calculated as FeO.

It is believed that the amount of magnesia and ferrous/ferric oxide components in a mineral composition has a significant influence on the thermostability of the MMV fibres. The ferrous/ferric oxide plays the important role of a crystal nucleating agent in the conversion of the fibre material from an amorphous condition to a crystalline or pseudo crystalline state during external influence of heat, e.g. during fire. Accordingly, this provides certain restrictions on the minimum amount of ferrous/ferric oxide component present in the composition. It should be noted that MMV fibre material without ferrous or ferric oxide may be capable of with-standing high temperatures which are reached by slow heat-up but not the fast heat-up resulting e.g. from external fire. When MMV fibre material is subjected to fire (sudden and/or fast heat-up), the structure of the material, i.e. the stone wool, is converted from an amorphous condition to a crystalline state.

Thus, the thermostability of MMV fibres depends on their ability to rapidly crystallize when they are exposed to the influence of sudden heat or fire, i.e. when they are subjected to the influence of temperatures of up to about 1000°C, such as temperatures of 700-800°C. By undergoing a rapid crystallization the shrinkage of products made from such fibres is only minimal. A fibre capable of rapid crystallization is obtained by including a crystal nucleating agent in the fibre material.

MMV fibres, such as the fibres described in the above-mentioned international patent application, having a relatively high concentration of FeO tend to undergo a rapid crystallization when heated to temperatures of up to about 1000°C.

However, the tendency of such fibres to crystallize at such temperatures has an adverse effect on the properties of the melts from which such fibres are made.

In the production of MMV fibres the starting materials are heated to a sufficiently high temperature to form a melt which through gutters or the like is passed to a spinner in which the melt is spun into fibres.

Generally for rock based melt compositions an increasing content of MgO and FeO will raise the liquidus temperature. Furthermore, a FeO content of above 6% combined with a low Al₂O₃ content will cause high crystallization rate. Therefore substantial slag formation in the gutters and outlet of the furnace have been observed for compositions within the limits of the prior art (PCT/DK93/00435) which makes the melt less suitable for spinning.

For these compositions it has been necessary to heat the melt to a temperature of at least 200°C above the liquidus temperature of the melt, which is 50-100°C higher than in normal manufacturing conditions. The liquidus temperature is defined as the temperature at which a melt starts to crystallize when it is cooled.

WO 93/22251 discloses mineral fibres capable of dissolving in a physiological medium and having the general composition:

| | |
|---|---|
| SiO₂ | 48-67% by weight |
| Al₂O₃ | 0- 8% by weight |
| Fe₂O₃ | 0-12% by weight |
| CaO | 16-25% by weight |
| MgO | 1-16% by weight |
| Na₂O + K₂O | 0- 6.5% by weight |
| P₂O₅ | 0- 5% by weight |

with the previso that
Na₂O + P₂O₅ ≧ 2% by weight
Fe₂O₃ + Al₂O₃ ≦ 12% by weight
CaO + MgO + Fe₂O₃ ≧ 23 by weight

The high dissolution rate of the prior art fibres is due to the high contents of alkaline oxides, such as Na₂O and/or P₂O₅.

The object of the invention is to provide MMV fibres which are obtainable from a melt having a relatively low liquidus temperature and a low crystallisation rate and thereby not creating substantial slag formation in the process, and which at the same time exhibit a good thermostability and a high dissolution rate in biological fluids.

The fibres of the invention comprise:

| | |
|---|---|
| SiO₂ | 48-60% by weight |
| Al₂O₃ | 1-4% by weight |
| FeO | 6-10% by weight |
| CaO | 20-32% by weight |
| MgO | 7-20% by weight |
| Na₂O | 0-10% by weight |
| K₂O | 0-6 % by weight |

the total amount of FeO and Fe₂O₃ being calculated as FeO, the ratio of (Na₂O + K₂O + 0.1•CaO) to (MgO + FeO) being greater than 0.15, (MgO + FeO) being greater than 14 % by weight and (Na₂O + K₂O) being less than or equal to 10% by weight.

The invention is based on the discovery that both the liquidus temperature and the crystallisation rate of the melts for the production of fibres according to the invention is lowered to desirable respective levels by a broad range of compositions as long as the above relations are met. Thus, a relatively high concentration of alkali may be used or a relatively low concentration of MgO + FeO combined with an increased amount of CaO, or a combination of both. On the other hand, in order to maintain a high thermostability, the sum of MgO and FeO should be above 14% by weight.

In addition to the oxides mentioned above the fibres of the invention may contain other oxides, such as B₂O₃, BaO, P₂O₅, MnO₂, ZrO₂ and TiO₂.

In a preferred embodiment of the invention the alkali concentration, i.e. the sum of Na₂O and K₂O is equal to or greater than 4. Thus, the liquidus temperature is reduced with increasing concentrations of alkali. However, too high concentrations of alkali have a negative influence on the thermal stability.

Within a range of levels of alkali concentrations below a level of balance with the concentration of Al₂O₃ an increase in the concentrations of alkali causes an increase in the melt viscosity. At levels of alkali concentration higher than the level of balance a further increase in the concentration of alkali causes a reduction of the melt viscosity.

In another preferred embodiment of the invention the concentration of MgO is preferably between 7 and 10% by weight. The higher the content of CaO, works like the alkalis in reduction of the liquidus temperature, however, with a somewhat lower effect per weight percentage. At the same time the lower MgO plus FeO content reduces the crystallisation rate.

In order to obtain a viscosity which is particularly suitable for spinning, the melt should contain from 48 to 60% by weight of SiO₂.

It would be desirable to combine high concentrations of SiO₂ with very low concentrations of Al₂O₃, but since low Al₂O₃-containing raw materials are difficult to obtain it is preferred to use starting materials having a content of SiO₂ in the lower end of the above-mentioned range. The Al₂O₃ content of the fibres of the invention should be above 1.0% by weight in order to keep the costs of the raw materials within reasonable limits.

The composition of the melt used for the manufacture of MMV fibres according to the invention preferably contains the following oxides in such weight percentages that CaO + MgO + Na₂O + K₂O + BaO + B₂O₃ minus 2•Al₂O₃ is greater than 30.

The fibres of the invention may e.g. be prepared from the following naturally occurring raw materials:

| | | |
|---|---|---|
| | Quartz sand | about 36 % |
| | Olivine sand | about 17 % |
| | Iron ore | about 12 % |
| and | Dolomite | about 11 % |
| together with: | Cement | about 12 % |
| and | MMV fibre waste | about 12 %. |

Examples of other raw materials are slags, glass, foundry sand, lime stone, magnesite, brucite, talc, serpentinite, pyroxenite and wollastonite.

The mineral composition of the present invention is particularly suitable for the manufacture of MMV fibres by the method disclosed e.g. in WO 92/06047.

For the manufacturing of fibres e.g. by this method a composition having a viscosity of approximately 15 poise at the working temperature is preferred. On the other hand a melt composition having a viscosity within the range of 4-15 poise at the working temperature is acceptable.

The invention further relates to a method of maintaining the high rate of dissolution in a biological fluid of a thermostable MMV fibre material, which method comprises the use of the MMV fibres as described above.

In the present specification and claims, the term "biological fluid" denotes physiological salt or saline solutions as well as any fluid present in vivo in mammals.

The MMV fibre material according to the invention exhibits a sintering temperature of at least 900°C, more preferably at least 1000°C.

The MMV fibre material according to the invention which is thermostable and has a high dissolution rate in biological fluids is useful for thermal and/or acoustic insulation purposes or as a plant growing medium or substrate.

The fibres are also useful as reinforcement fibres in various matrix materials such as plastics, rubber compositions and ceramics or as a filler.

### EXAMPLE

The dissolution rate and the thermostability of MMV fibres made from various compositions was determined as described below. The fibres were made by melting the raw materials in a cupola furnace, followed by spinning the fibre material into stone wool. Binder was not applied.

The constituents of each test composition is shown in Table 1. It is to be understood that in addition to the constituents mentioned in Table 1 each of the tested fibre compositions contained up to a total of 2 w/w% of other constituents (traces) forming part of the raw materials used. Such other constituents may include, for example, manganous oxide, chromium oxide, and various sulfur compounds. However, the percentages in Table 1 are standardised to a total of 100 w/w% of the listed constituents.

Tests 3-5 illustrate compositions according to the invention, whereas tests A-F are comparative compositions, test D-E being mentioned in PCT/DK93/00435.

### TEST METHODS

### Dimensions of the Fibre Samples

The samples were sieved, and the fraction below 63 µm was used for the tests.

For each sample, the fibre diameter distribution was determined, measuring the diameter and length of 200 individual fibres by means of an scanning electron microscope (1500 X magnification). The readings were used for calculating the specific surface of the fibre samples, taking into account the density of the fibres.

### Measurements of Rate of Dissolution (Stationary Set-Up)

300 mg of fibres were placed in polyethylene bottles containing 500 ml of a modified Gamble's solution (i.e. with complexing agents) at pH 7.5. Once a day the pH was checked and if necessary adjusted by means of HCl.

The tests were carried out during a one week period. The bottles were kept in water bath at 37°C and shaken vigorously twice a day. Aliquots of the solution were taken out after one and four days and analysed for Si on an Perkin-Elmer Atomic Absorption Spectrophotometer.

The modified Gamble's solution, adjusted to pH 7.5 ± 0.2, had the following composition:

| | g/l |
|---|---|
| MgCl₂•6H₂O | 0.212 |
| NaCl | 7.120 |
| CaCl₂•2H₂O | 0.029 |
| Na₂SO₄ | 0.079 |
| Na₂HPO₄ | 0.148 |
| NaHCO₃ | 1.950 |
| (Na₂-tartrate)•2H₂O | 0.180 |
| (Na₃-citrate)•2H₂O | 0.152 |
| 90% Lactic acid | 0.156 |
| Glycine | 0.118 |
| Na-pyruvate | 0.172 |
| Formal in | 1 ml |

### Calculations

Based on the dissolution of SiO₂ (network dissolution), the specific thickness dissolved was calculated and the rate of dissolution established (nm/day). The calculations were based on the SiO₂ content in the fibres, the specific surface and the dissolved amount of Si.

### Thermostability

The thermostability expressed as the sintering temperature of the fibre compositions 3-4 and A-F was established by the following method:

A sample (5 x 5 x 7.5 cm) of stone wool made of the fibre composition to be tested was placed in a furnace preheated to 700°C. After 0.5 hours exposure the shrinkage and the sintering of the sample was evaluated. The method was repeated each time with a fresh sample and a furnace temperature 50°C above the previous furnace temperature until the maximum furnace temperature, at which no sintering or no excessive shrinkage of the sample was observed, was determined.

The test results are shown in Table 2 below.

**Table 1**

| Test No. | Composition, % by weight | | | | | | | |
|---|---|---|---|---|---|---|---|---|
| | SiO₂ | Al₂O₃ | TiO₂ | FeO | CaO | MgO | Na₂O | K₂O |
| 3 | 50.7 | 2.9 | 0.2 | 6.7 | 25.7 | 10.1 | 3.0 | 0.6 |
| 4 | 52.6 | 3.2 | 0.3 | 6.8 | 25.3 | 11.1 | 0.1 | 0.6 |
| 5 | 55.0 | 2.1 | 0.2 | 7.5 | 25.6 | 8.4 | 0.8 | 0.3 |
| A | 52.2 | 4.4 | 0.3 | 8.1 | 29.5 | 4.4 | 0.1 | 1.0 |
| B | 60.4 | 2.7 | 0.6 | 5.5 | 11.0 | 11.3 | 7.9 | 0.6 |
| C | 53.0 | 3.1 | 0.5 | 5.1 | 28.7 | 8.2 | 0.7 | 0.6 |
| D | 56.4 | 2.7 | 0.5 | 7.3 | 17.0 | 15.1 | 0.4 | 0.6 |
| E | 46.8 | 13.2 | 2.9 | 6.3 | 17.2 | 9.6 | 2.8 | 1.2 |
| F | 54.9 | 4.0 | 0.6 | 6.8 | 17.2 | 15.3 | 0.5 | 0.7 |

**Table 2**

| Test No. | Sintering temperature, °C | Dissolution, pH = 7.5* | Process Characteristics |
|---|---|---|---|
| 3 | 900 | 8.1 | No tendency to slag formation |
| 4 | 1000 | 9.2 | " |
| 5 | >1100 | 19.3 | " |
| A | 750 | 37 | " |
| B | 750 | 4.8 | " |
| C | 800 | 6.1 | " |
| D | 1100 | 13.0 | Strong tendency |
| E | 1050 | 3.0 | No tendency |
| F | 1050 | 12.0 | Strong tendency |

| | | | |
|---|---|---|---|
| * Dissolution rate of Si (nm/day) 1st-4th day | | | |

The comparative examples A-C all have a low liquidus temperature and a low crystallization rate and thereby a low tendency to slag formation due to either a relatively high content of alkali and/or high content of CaO and a relatively low concentration of MgO + FeO. However, the thermostability of the comparative examples A-C are all low due to either a low content of FeO and/or a low content of MgO.

The comparative examples D and F both have a strong tendency to slagging due to the high content of (MgO + FeO) in combination with the low content of alkali and/or CaO giving a relative high liquidus temperature and crystallisation rate. Due to the high content of MgO + FeO examples D and F both have excellent thermostability.

The comparative example E exhibits both excellent thermostability due to the relative high content of (MgO + FeO) and a low tendency to slagging due to the high content of Al₂O₃. However, due to the high content of Al₂O₃ the comparative example E has a rather low dissolution rate in biological fluids.

## Claims

1. Thermostable MMV fibres exhibiting a high dissolution rate in biological fluids, **characterized** in that they comprise
| | |
|---|---|
| SiO₂ | 48-60% by weight |
| Al₂O₃ | 1-4% by weight |
| FeO | 6-10% by weight |
| CaO | 20-32% by weight |
| MgO | 7-20% by weight |
| Na₂O | 0-10% by weight |
| K₂O | 0-6% by weight |
the total amount of FeO and Fe₂O₃ being calculated as FeO, the ratio of (Na₂O + K₂O + 0. 1•CaO) to (MgO + FeO) being >0.15 and (MgO + FeO) being greater than 14% by weight and (Na₂O+ K₂O) being less than or equal to 10% by weight.

2. Thermostable MMV fibres according to claim 1, **characterized** in that Na₂O + K₂O is equal to or greater than 4.

3. Thermostable MMV fibres according to claim 1 or 2, **characterized** in that it contains the following oxides in such weight percentages that CaO + MgO + Na₂O + K₂O + BaO + B₂O₃ minus 2•Al₂O₃ is greater than 30.

4. Thermostable MMV fibres according to any of the preceding claims, **characterized** in that the concentration of MgO is between 7 and 10% by weight.

5. Thermostable MMV fibres according to any one of the preceding claims, **characterized** in that the concentration of (Na₂O + K₂O) is greater than 7% by weight.

6. Thermostable MMV fibres according to any one of the preceding claims, **characterized** in that the concentration of Al₂O₃ is between 1% and 4% by weight.

7. Use of MMV fibres according to any of claims 1-6 for thermal and/or acoustic insulation purposes.

8. Use of MMV fibres according to any of claims 1-6 as a plant growth medium or substrate.

9. Use of MMV fibres according to any of claims 1-6 for reinforcement purposes.

10. Use of MMV fibres according to any one of claims 1-6 as a filler.

## Patentansprüche

1. Thermostabile MMV-Fasern, welche hohe Auflösungsgeschwindigkeit in biologischen Fluiden aufweisen, dadurch gekennzeichnet, daß sie enthalten:
| | |
|---|---|
| SiO₂ | 48 - 60 Gew.-% |
| Al₂O₃ | 1 - 4 Gew.-% |
| FeO | 6 - 10 Gew.-% |
| CaO | 20 - 32 Gew.-% |
| MgO | 7- 20 Gew.-% |
| Na₂O | 0 - 10 Gew.-% |
| K₂O | 0 - 6 Gew.-% |
wobei die Gesamtmenge von FeO und Fe₂O₃ als FeO berechnet wird, das Verhältnis von (Na₂O + K₂O + 0,1 • CaO) zu (MgO + FeO) > 0,15 ist, (MgO + FeO) größer als 14 Gew.-% ist und (Na₂O + K₂O) kleiner oder gleich 10 Gew.-% ist.

2. Thermostabile MMV-Fasern nach Anspruch 1, dadurch gekennzeichnet, daß Na₂O + K₂O gleich oder größer als 4 ist.

3. Thermostabile MMV-Fasern nach Anspruch 1 oder 2, dadurch gekennzeichnet, daß in ihnen die folgenden Oxide in solchen Gewichtsprozenten enthalten sind, daß CaO + MgO + Na₂O + K₂O + BaO + B₂O₃ minus 2 • Al₂O₃ größer als 30 ist.

4. Thermostabile MMV-Fasern nach einem der vorstehenden Ansprüche, dadurch gekennzeichnet, daß die Konzentration von MgO zwischen 7 und 10 Gew.-% beträgt.

5. Thermostabile MMV-Fasern nach einem der vorstehenden Ansprüche, dadurch gekennzeichnet, daß die Konzentration von (Na₂O + K₂O) größer als 7 Gew.-% ist.

6. Thermostabile MMV-Fasern nach einem der vorstehenden Ansprüche, dadurch gekennzeichnet, daß die Konzentration von Al₂O₃ zwischen 1 und 4 Gew.-% beträgt.

7. Verwendung von MMV-Fasern nach einem der Ansprüche 1 - 6 für thermische und/oder akustische Isolationszwecke.

8. Verwendung von MMV-Fasern nach einem der Ansprüche 1 - 6 als Pflanzenwachstumsmedium oder -träger.

9. Verwendung von MMV-Fasern nach einem der Ansprüche 1 - 6 für Verstärkungszwecke.

10. Verwendung von MMV-Fasern nach einem der Ansprüche 1 - 6 als Füllstoff.

## Revendications

1. Fibres synthétiques vitreuses ("MMV") thermostables présentant une vitesse de dissolution élevée dans les fluides biologiques, caractérisées en ce qu'elles comprennent :
| | |
|---|---|
| SiO₂ | 48 à 60 % en poids |
| Al₂O₃ | 1 à 4 % en poids |
| FeO | 6 à 10 % en poids |
| CaO | 20 à 32 % en poids |
| MgO | 7 à 20 % en poids |
| Na₂O | 0 à 10 % en poids |
| K₂O | 0 à 6 % en poids |
La quantité totale de FeO et Fe₂O₃ étant calculée en termes de FeO, le rapport de (Na₂O + K₂O + 0,1 CaO) à (MgO + FeO) étant supérieur à 0,15, la somme (MgO + FeO) étant supérieure à 14 % en poids, et la somme (Na₂O+K₂O) étant inférieure ou égale à 10 % en poids.

2. Fibres MMV thermostables selon la revendication 1, caractérisées en ce que la somme (Na₂O + K₂O) est égale ou supérieure à 4.

3. Fibres MMV thermostables selon la revendication 1 ou 2, caractérisées en ce qu'elles contiennent les oxydes suivants en des pourcentages pondéraux tels que le total (CaO + MgO + Na₂O + K₂O + BaO + B₂O₃ - 2. Al₂O₃) soit supérieur à 30.

4. Fibres MMV thermostables selon l'une quelconque des revendications précédentes, caractérisées en ce que la concentration de MgO est comprise entre 7 et 10 % en poids.

5. Fibres MMV thermostables selon l'une quelconque des revendications précédentes, caractérisées en ce que la concentration de (Na₂O + K₂O) est supérieure à 7 % en poids.

6. Fibres MMV thermostables selon l'une quelconque des revendications précédentes, caractérisées en ce que la concentration de Al₂O₃ est comprise entre 1 et 4 % en poids.

7. Utilisation de fibres MMV selon l'une quelconque des revendications 1 à 6, à des fins d'isolation thermique et/ou acoustique.

8. Utilisation de fibres MMV selon l'une quelconque des revendications 1 à 6, en tant que milieu ou substrat pour la croissance des plantes.

9. Utilisation de fibres MMV selon l'une quelconque des revendications 1 à 6, à des fins de renforcement.

10. Utilisation de fibres MMV selon l'une quelconque des revendications 1 à 6, en tant que charge.
